# EUROPÄISCHE PATENTSCHRIFT

(11) **EP 1 234 968 B1**
(45) Veröffentlichungstag und Bekanntmachung des Hinweises auf die Patenterteilung: **07.06.2006**
(21) Anmeldenummer: 02000498.2
(22) Anmeldetag: 09.01.2002
(51) Int. Cl.: F02D 41/14, F02D 13/02

(54) **Verfahren zum Synchronisieren der Füllung von Zylindern einer Brennkraftmaschine**
Method for synchronizing the filling of the cylinders of an internal combustion engine
Procédé pour synchroniser le remplissage de cylindres d'un moteur à combustion interne

(30) Priorität: 15.02.2001 DE 10106921
(43) Veröffentlichungstag der Anmeldung: 28.08.2002
(73) Patentinhaber: Bayerische Motoren Werke Aktiengesellschaft, 80809 München (DE)
(72) Erfinder: Rieger, Johannes, 82166 Gräfelfing (DE); Siegl, Norbert, 83661 Lenggries (DE); Achilles, Dietrich, 85293 Reichertshausen (DE)

(56) Entgegenhaltungen:
- WO-A-01/04465
- DE-A- 3 834 711
- DE-A- 4 236 008
- DE-A- 19 857 183
- DE-A- 19 859 018
- DE-A- 19 951 581
- DE-C- 19 947 037
- US-A- 5 267 548

## Beschreibung

Die Erfindung betrifft ein Verfahren zum Synchronisieren der Füllung von Zylindern einer Hubkolben-Brennkraftmaschine.

Brennkraftmaschinen, wie beispielsweise die im Kraftfahrzeugbau häufig anzutreffenden Ottomotoren, sind in den unterschiedlichsten Bauformen bekannt. Insbesondere in der Ausbildung als Hubkolben-Verbrennungsmotor finden neben in der Regel mehrzylindrigen Reihenmotoren auch Bauformen Anwendung, bei denen die Zylinder in zwei oder mehreren Reihen, den sogenannten Zylinderbänken, angeordnet sind, wie zum Beispiel bei Boxer- oder V-Motoren. Um bei solchen Brennkraftmaschinen auf in konstruktiver Hinsicht einfache und damit kostengünstige Weise die Gaswechselventile zu steuern, ist es üblich, die Zylinderbänke jeweils mit einem die Gaswechselventile betätigenden Stellglied zu versehen. Derartige Stellglieder können beispielsweise als herkömmliche Nockenwellen oder als Aktoren, welche die Gaswechselventile elektromagnetisch steuern, ausgebildet sein.

Die Gaswechselventile werden dabei häufig variabel gesteuert, etwa um die Brennkraftmaschine hinsichtlich ihrer Schadstoffemission oder ihres Kraftstoffverbrauchs optimiert zu betreiben. Eine variable Ventilsteuerung bedeutet im Rahmen der vorliegenden Erfindung, daß der Ventilhub und/oder die Ventilsteuer- beziehungsweise Ventilöffnungszeiten frei steuerbar sind, das heißt nicht ausschließlich lastabhängig, sondern auch in Hinsicht auf andere Parameter, wie zum Beispiel der Drehzahl, Geschwindigkeit, Kühlmitteltemperatur oder sonstiger Einflußfaktoren auf das Betriebsverhalten einer Brennkraftmaschine, variiert werden können. Bei einer variablen Ventilsteuerung ist es deshalb im besonderen Maße erforderlich, die Gaswechselventile äußerst exakt zu steuern.

Der Betrieb von Brennkraftmaschinen mit mehreren Zylinderbänken, die jeweils wenigstens ein Stellglied für die Betätigung der Gaswechselventile aufweisen, ist mit dem Nachteil verbunden, daß häufig eine ungleichmäßige Füllung der Zylinder mit dem zu verbrennenden Luft-Kraftstoffgemisch, genauer gesagt mit der für die Verbrennung zuzuführenden Luftmenge, auftritt. Ursächlich hierfür ist in erster Linie, daß aufgrund der separaten Stellglieder der Zylinderbänke eine gleichmäßige Verteilung der entsprechend dem Lastzustand der Brennkraftmaschine angesaugten Luftmenge auf die einzelnen Zylinder nicht mehr sichergestellt ist. Denn die einzelnen Stellglieder unterliegen unterschiedlichen Einflußfaktoren, wie etwa Fertigungs- und Einbautoleranzen, Verschleiß, Temperatur oder fehlerbehaftete sensorische Erfassung von Ventilhub und - steuerzeiten, die zu einer voneinander abweichenden Ventilsteuerung führen können. Eine ungleichmäßige Füllung der Zylinder hat unter anderem eine ungleiche Drehmomentabgabe zur Folge, so daß sich vor allem im Leerlauf oder bei Teillast ein unerwünschter Laufzustand der Brennkraftmaschine ergibt.

Bei dem Betrieb einer mehrere Zylinderbänke aufweisenden Brennkraftmaschine mit einer Lambdasonde, welche die zuzuführende Kraftstoffmenge in Abhängigkeit von der Zusammensetzung des Abgases regelt, ist es gebräuchlich, für jede Zylinderbank eine eigene Lambdasonde vorzusehen. In diesem Fall kann eine ungleichmäßige Füllung der Zylinder zudem bei den einzelnen Zylinderbänken eine divergierende Vorgabe der Kraftstoffmenge mit sich bringen und so schwerwiegende Fehler etwa in einem durch eine elektronische Steuereinheit gesteuerten Kraftstoffversorgungssystem hervorrufen.

Ein Verfahren gemäß dem einleitenden Teil des Patentanspruchs 1 ist aus DE 199 51 581 A bekannt. Zur Gleichstellung wenigstens zweier Zylinderbänke z.B. mit voneinander getrennten Saugrohren einer Brennkraftmaschine, bei der zylinderbankspezifische Unterschiede im Drehmoment auftreten, wird der Mittelwert der die Drehmomentbeiträge der Zylinder einer Bank repräsentierenden Größen an der Kurbelwelle bzw. Nockenwelle gebildet und eine Abweichung der Mittelwerte der Bänke durch eine entsprechende Korrektur wenigstens einer der Drosselklappenstellungen, aber auch eine Verstellung des Zündwinkels der Zylinder einer oder beider Zylinderbänke durchgeführt.

Aus DE 198 57 183 A ist ein Diagnoseverfahren zur Überprüfung der Funktionsfähigkeit einer variablen Ventilsteuerung einer Brennkraftmaschine bekannt, bei der jede Zylinderbank einen zugeordneten Lambdaregelkreis besitzt und bei der eine für beide Zylinderbänke gemeinsame Lasterfassung vorgesehen ist. Es wird eine Fehlersignal ausgegeben und/oder gespeichert, wenn die Abweichung von Signalen für die tatsächlich angesaugte Luftmasse und für die aus der Stellung der Drosselklappe, dem Saugrohrdruck, der Drehzahl und einem Sollwert für den Zustand der variablen Ventilsteuerung abgeleitete Brennraumfüllung über einem vorbestimmten Wert liegt.

Auch sind Verfahren zur Steuerung der Zylinderfüllung mit dem Ziel der Reduzierung der Laufunruhe bei Brennkraftmaschinen mit individueller Zylindersteuerung bekannt. Beispielsweise ist es aus WO 01 04465 A bekannt, die Gleichstellung der in den Zylindern jeweils erzielten Drehmomente ohne Nockensteuerung durch Variieren der Öffnungszeiten der Einlaß- und/oder Auslaßventile unter Berücksichtigung einer Überlappung der Öffnungszeiten der Einlaß- und Auslaßventile zu erreichen.

Der Erfindung liegt die Aufgabe zugrunde, ein Verfahren zum Synchronisieren der Füllung von Zylindern einer Brennkraftmaschine, insbesondere eines Hubkolben-Verbrennungsmotors, bereitzustellen, mit dem sich auf einfache und kostengünstige Weise eine gleichmäßige Füllung der Zylinder erzielen läßt.

### Die Lösung dieser Aufgabe ist in Patentanspruch 1 beschrieben

Ein solches Verfahren macht sich die Erkenntnis zu eigen, daß sich eine gleichmäßige Füllung der Zylinder auf einfache und kostengünstige Weise dann erreichen läßt, wenn für jede Zylinderbank getrennt Signale sensorisch erfaßt werden, welche die den Zylindern der jeweiligen Zylinderbank je Hub zuführbare Kraftstoffmenge repräsentieren, und die Signale der jeweiligen Zylinderbänke miteinander verglichen werden. Dabei kommt zum Tragen, daß das den Zylindern zuzuführende Luft-Kraftstoff-Gemisch für jede Zylinderbank getrennt auf die gleiche Luftzahl geregelt wird, denn hierdurch ist es ohne größeren Aufwand möglich, die Signale für jede Zylinderbank getrennt zu erfassen. Werden den Zylinderbänken unterschiedliche Kraftstoffmengen für die jeweiligen Zylinder zugeführt, so ergibt sich aufgrund der gleichen Luftzahl eine relative Abweichung der jeweiligen Signale voneinander. Aus dieser durch den Vergleich der Signale festgestellten Abweichung wird eine Stellgröße gebildet, durch die dann ein entsprechendes Stellglied wenigstens einer Zylinderbank zum Kompensieren der festgestellten Abweichung geregelt wird.

Zusätzlich werdengemäß der vorliegenden Erfindung auch Laufunruhewerte eines jeden Zylinders ermittelt und für jede Zylinderbank zu einem Bankmittelwert gemittelt. Denn das an einer Zylinderbank abgegebene und für die Laufunruhewerte kennzeichnende Drehmoment ist in der Regel repräsentativ für die Füllung der Zylinder. Die zur Regelung wenigstens eines Stellglieds heranzuziehende Stellgröße läßt sich in diesem Fall entweder allein aus der relativen Abweichung der jeweiligen Bankmittelwerte ableiten oder, falls die Bankmittelwerte zusätzlich zu den oben beschriebenen Signalen ermittelt werden, durch Heranziehung der relativen Abweichung "sowohl der Signale als auch der Bankmittelwerte voneinander bestimmen, wobei letzteres auch mit einer Gewichtung der vorgenannten Abweichungen verbunden sein kann.

Durch das erfindungsgemäße Verfahren wird die Füllung der Zylinder hinsichtlich der Zylinderbänke synchronisiert. Eine aufwendige Synchronisierung der Füllung der Zylinder innerhalb einer Zylinderbank findet hingegen nicht statt, so daß sich das erfindungsgemäße Verfahren kostengünstig realisieren läßt.

Das erfindungsgemäße Verfahren kommt in besonders vorteilhafter Weise zur Geltung, weil eine zentrale Lasterfassung vorgesehen ist, durch welche die Luftmenge des den Zylindern zuzuführenden Luft-Kraftstoff-Gemisches lastabhängig bereitgestellt wird. Eine solche zentrale Lasterfassung ergibt sich zum Beispiel bei einer einzigen Drosselklappe oder einer gemeinsamen Messung der Luftmenge für alle Zylinderbänke. Im Unterschied zu Brennkraftmaschinen, bei denen mehreren Zylinderbänken jeweils eine eigene Lasterfassung zugeordnet wird, ist es bei einer solchen zentralen Lasterfassung nicht möglich, die Bereitstellung der Luftmenge und damit die Füllung der Zylinder der einzelnen Zylinderbänke durch Abgleichen der Lasterfassungen, etwa mittels einer elektronischen Steuereinheit, zu synchronisieren. Das erfindungsgemäße Verfahren hingegen macht sich die variable Steuerung der Gaswechselventile durch die für die Zylinderbänke jeweils separat vorhandenen Stellglieder zu nutze, so daß bei einer zentralen Lasterfassung eine Synchronisierung der Füllung der Zylinder ohne weiteres erfolgen kann.

In Hinsicht auf eine einfache Durchführung des Verfahrens ist es von Vorteil, die relative Abweichung der jeweiligen Signale und/oder der jeweiligen Bankmittelwerte der Zylinderbänke voneinander durch Bildung der Differenz oder des Quotienten jeweils zweier Signale oder Bankmittelwerte zu ermitteln. In einer bevorzugten Ausgestaltung der Erfindung wird aus den relativen Abweichungen der jeweiligen Signale und der jeweiligen Bankmittelwerte der Zylinderbänke voneinander ein gemeinsamer Kennwert zur Bestimmung der das Stellglied regelnden Stellgröße gebildet. Ein solcher Kennwert kann, wie oben bereits erwähnt, eine unterschiedliche Gewichtung der jeweiligen Abweichungen oder weitere Parameter, wie etwa Last, Kühlmitteltemperatur, Temperatur der angesaugten Luft, Stellung der Drosselklappe oder Zusammensetzung des Abgases, berücksichtigen und danach zu einer auch dies berücksichtigenden variablen Ventilsteuerung im oben genannten Sinne beitragen.

Eine vorteilhafte Ausgestaltung des erfindungsgemäßen Verfahrens ergibt sich ferner dann, wenn die aus der relativen Abweichung der jeweiligen Signale und/oder der jeweiligen Bankmittelwerte der Zylinderbänke voneinander und/oder aus dem gemeinsamen Kennwert bestimmte Stellgröße digital in einem nichtflüchtigen Speicher, vorzugsweise von einer elektronischen Steuereinheit, gespeichert wird. Dies bietet die Möglichkeit, eine Adaption der Stellglieder der jeweiligen Zylinderbänke zum Synchronisieren der Füllung der Zylinder festzuhalten, so daß etwa sofort nach einem Motorstart oder auch nach einem Verlust der Batteriespannung mittels beispielsweise eines FLASH- oder EEPROM-Moduls eine entsprechende Synchronisierung durch Zurückgreifen auf die abgespeicherten Werte erfolgen kann.

Als vorteilhaft hat sich zudem der erfindungsgemäße Vorschlag erwiesen, durch das Stellglied den Ventilhub und die Öffnungsdauer der Einlaßventile steuern. Vor allem die variable Steuerung der Einlaßventile läßt sich auf vergleichsweise einfache Weise realisieren. Zu diesem Zweck wird eine Nockenwelle verwendet, um eine praxisgerechte Ausgestaltung zu gewährleisten. Dabei findet eine lastabhängige Adaption der Stellgröße statt. Auf diese Weise ist es zum Beispiel möglich, den durch die Stellgröße geregelten Ventilhub optimiert an die etwa bei Teillast oder im Leerlauf auftretenden Betriebsbedingungen anzupassen.

Zweckmäßigerweise repräsentiert das Signal die durch eine elektronische Steuereinheit aus der einem Zylinder je Hub zuführbaren Kraftstoffmenge ermittelte Einspritzzeit. Da im Zusammenhang mit Brennkraftmaschinen zunehmend häufiger elektronische Steuereinheiten, wie beispielsweise eine digitale Motorelektronik (DME), Anwendung finden, welche die Einspritzzeit, etwa für eine Motordiagnose oder ähnliche Zwecke, ohnedies benötigen, läßt sich das erfindungsgemäße Verfahren auf diese Weise ohne größere Modifikationen bei konventionellen Brennkraftmaschinen implementieren. Zweckmäßig ist aus dem gleichen Grund zudem, wenn die Laufunruhewerte durch Ermittlung der Winkelbeschleunigung der Kurbelwelle der Brennkraftmaschine bestimmt werden, da die Erfassung der Winkelbeschleunigung zum Erkennen von Verbrennungsaussetzern bei Brennkraftmaschinen üblich ist.

Gemäß der Erfindung wird ferner vorgeschlagen, daß das Stellglied durch eine kontinuierliche oder sich periodisch wiederholende Ermittlung der relativen Abweichung der jeweiligen Signale und/oder der jeweiligen Bankmittelwerte der Zylinderbänke voneinander oder des aus diesen gebildeten Kennwerts geregelt wird. Vor allem die kontinuierliche Ermittlung der relativen Abweichung bringt den Vorteil mit sich, daß zum Beispiel durch Verschleiß bedingte Veränderungen im Laufe der Zeit erkannt und entsprechend korrigiert werden können. Um den derzeit gängigen Bauformen von Brennkraftmaschinen Rechnung zu tragen, wird schließlich vorgeschlagen, daß das erfindungsgemäße Verfahren bei einer Brennkraftmaschine durchgeführt wird, die als Hubkolbenmotor mit einer V-, W-Boxer- oder auch Sternanordnung der Zylinder ausgebildet ist.

Einzelheiten und weitere Vorteile des Gegenstandes der vorliegenden Erfindung ergeben sich aus der nachfolgenden Beschreibung eines bevorzugten Ausführungsbeispiels. In den zugehörigen Zeichnungen veranschaulichen im einzelnen:
- Fig. 1:: einen Schnitt durch den Zylinderkopf einer Brennkraftmaschine;
- Fig. 2a:: eine perspektivische Ansicht eines Stellglieds und eines durch dieses betätigten Ventils;
- Fig. 2b:: das Stellglied und das Ventil gemäß Fig. 2a in einer anderen perspektivischen Ansicht und
- Fig. 3: eine Explosionsdarstellung des Stellglieds zusammen mit dem Ventil nach den Fig. 2a und 2b.

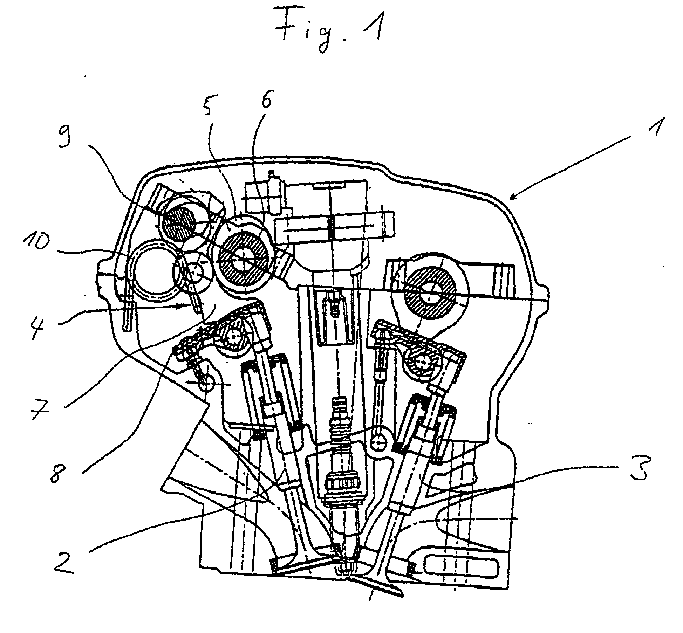

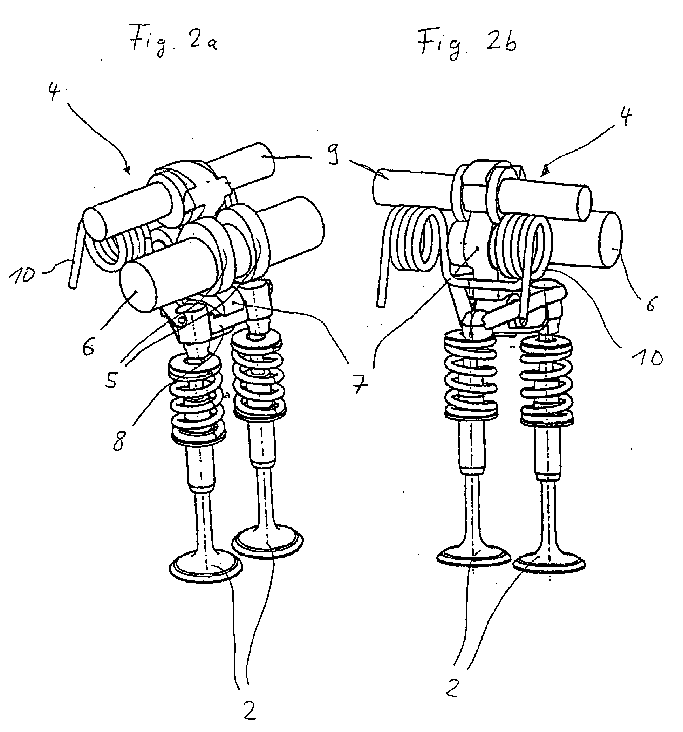

Der in Fig. 1 gezeigte Zylinderkopf 1 eines Zylinders findet bei einer als achtzylindriger V-Motor ausgebildeten Brennkraftmaschine, die demzufolge zwei Zylinderbänke aufweist, Anwendung. In dem Zylinderkopf 1 sind insgesamt vier Gaswechselventile 2, 3 zum Ein- und Auslassen des Luft-Kraftstoffgemisches in den beziehungsweise aus dem Zylinder angeordnet, von denen zwei als Einlaßventile 2 und zwei als Auslaßventile 3 dienen. Die beiden Einlaßventile 2 werden durch ein gemeinsames Stellglied 4 betätigt. Das in den Fig. 2a bis 3 näher zu erkennende Stellglied 4 weist eine mit einem Doppelnocken 5 versehene Nockenwelle 6 auf. Der Doppelnocken 5 drückt über einen Zwischenhebel 7 auf einen Schlepphebel 8, durch den ein Ventilstößel der Ventile 2 bewegt und die Ventile 2 damit geöffnet beziehungsweise geschlossen werden.

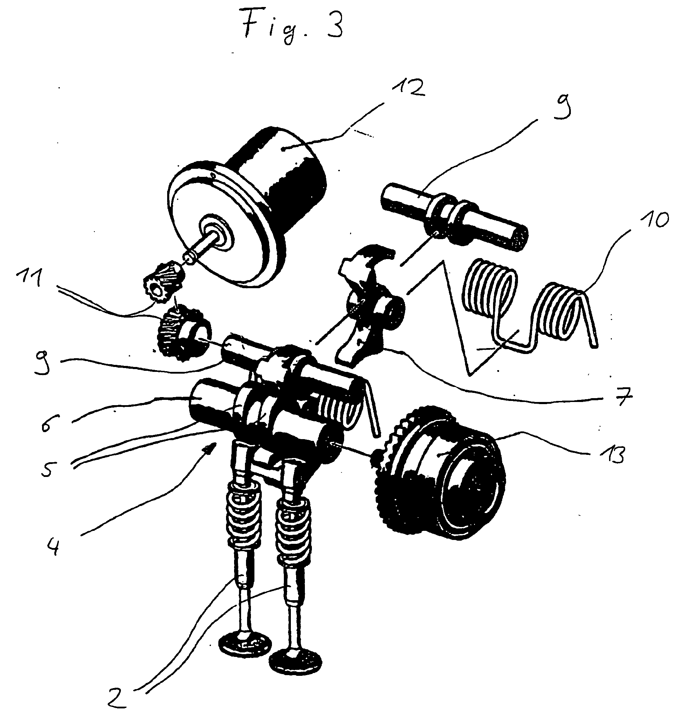

Der Zwischenhebel 7 ist zwischen der Nockenwelle 6 und einer verdrehbar gelagerten Exzenterwelle 9 angeordnet und durch eine Feder 10 in seiner Lage fixiert. Wie insbesondere in Fig. 3 zu erkennen ist, wird die Exzenterwelle 9 über ein Schneckengetriebe 11 von einem elektrischen Stellmotor 12 angetrieben. Der Stellmotor 12 wird durch eine elektronische Steuereinheit angesteuert, in der die für eine Ventilsteuerung relevanten Parameter, wie etwa Winkel eines Fahrpedals, Winkel der Exzenterwelle 9, Winkel der Nockenwelle 6 und dergleichen, elektronisch erfaßt sind. Eine durch den Stellmotor 12 in Abhängigkeit eines von der elektronischen Steuereinheit übermittelten Signals hervorgerufene Drehung der Exzenterwelle 9 bewirkt eine Veränderung der Lage des Zwischenhebels 7. Dies hat zur Folge, daß auch die durch die Doppelnocken 5 über den Zwischenhebel 7 auf den Schlepphebel 8 ausgeübte Hubbewegung verändert wird. Auf diese Weise läßt sich der Ventilhub der Ventile 2 variieren, um die Ventile 2 variabel zu steuern.

Wie Fig. 3 außerdem erkennen läßt, ist das Stellglied 4 mit einer als Schwenkversteller ausgebildeten hydrodynamischen Einrichtung 13 versehen, die an der Nockenwelle 6 angeordnet ist. Die hydrodynamische Einrichtung 13 weist im wesentlichen einen mit einem die Nockenwelle 6 antreibenden Kettenrad verbundenen Stator und einen starr mit der Nockenwelle 6 verbundenen Rotor auf. Zwischen dem Stator und dem Rotor sind Kammern ausgebildet, in die eine Hydraulikflüssigkeit, beispielsweise Öl, eingepreßt wird. Durch Verändern des Drucks der Hydraulikflüssigkeit in den Kammern lassen sich Rotor und Stator relativ zueinander verdrehen. Auf diese Weise ergibt sich eine sogenannte Nockenspreizung, mit der die Öffnungszeiten der Ventile 2 beeinflußbar sind. Die somit die Öffnungszeiten der Ventile 2 steuernde hydrodynamische Einrichtung 13 ist zusätzlich zu dem den Ventilhub der Ventile 2 steuernden Zwischenhebel 7 vorgesehen.

Mit einer solchermaßen ausgebildeten variablen Ventilsteuerung ist es möglich, die Füllung der Zylindern der Brennkraftmaschine zu synchronisieren. Zu diesem Zweck wird ein Signal, das die einem Zylinder je Hub in Abhängigkeit von einer lastabhängig bereitgestellten Luftmenge zuführbare Kraftstoffmenge repräsentiert, sensorisch erfaßt und in Form eines die Einspritzzeit repräsentierenden Wertes der elektronischen Steuereinheit zugeführt. Das Signal wird dabei mittels einer für jede Zylinderbank vorgesehenen Lambdasonde, durch die das den Zylindern zuzuführende Luft-Kraftstoff-Gemisch auf eine vorgegebene Luftzahl geregelt wird, für jede der beiden Zylinderbänke der Brennkraftmaschine getrennt ermittelt.

Darüber hinaus werden Laufunruhewerte eines jeden Zylinders ermittelt und für jede Zylinderbank zu einem Bankmittelwert gemittelt. Die Laufunruhewerte werden durch Messung der Winkelbeschleunigung der Kurbelwelle der Brennkraftmaschine bestimmt und gleichfalls in der elektronischen Steuereinheit abgelegt. Danach werden die Signale und die Bankmittelwerte der Zylinderbänke durch Bildung der Differenz jeweils zweier Signale beziehungsweise Bankmittelwerte miteinander verglichen. Wird dabei eine relative Abweichung der jeweiligen Signale und der jeweiligen Bankmittelwerte voneinander festgestellt, so werden aus diesen beiden Abweichungen ein gemeinsamer Kennwert gebildet. Aus dem Kennwert wird dann eine Stellgröße bestimmt, die in digitaler Form in einem nichtflüchtigen Speicher der elektronischen Steuereinheit abgelegt wird, um die Stellglieder 4 der Zylinder auch adaptiv steuern zu können.

In Abhängigkeit von der Stellgröße werden die Stellglieder 4 der Zylinder der Brennkraftmaschine geregelt, und zwar derart, daß durch Verändern des Ventilhubs und gegebenenfalls der Öffnungsdauer der Einlaßventile 2 die festgestellte Abweichung selbsttätig kompensiert wird. In der Regel ist es dabei ausreichend, wenn nur die Stellglieder 4 auf Seiten einer der beiden Zylinderbänke entsprechend betätigt werden. Es ist auch möglich, wenn auch mit einem größeren Aufwand, zusätzlich oder anstelle der Stellglieder 4 der Einlaßventile 2 die Stellglieder der Auslaßventile 3 zu regeln.

Um etwa durch Verschleiß bedingte Veränderungen im Laufe der Zeit zu erkennen und die Regelung der Stellglieder 4 entsprechend korrigieren zu können, wird die relative Abweichung der jeweiligen Signale und der jeweiligen Bankmittelwerte der Zylinderbänke voneinander kontinuierlich ermittelt. In diesem Zusammenhang kommt die elektronische Speicherung der durch den Kennwert gebildeten Stellgröße in einem nichtflüchtigen Speicher der elektronischen Steuereinheit zum Tragen, die eine selbsttätige und unverzügliche Anpassung der Stellglieder 4, etwa sofort nach einem Motorstart oder nach einem Verlust der Batteriespannung, gewährleistet. Die Adaption der Stellgröße findet dabei lastabhängig statt mit der Folge, daß der adaptive Korrekturwert optimiert an die etwa bei Teillast oder im Leerlauf auftretenden unterschiedlichen Betriebsbedingungen angepaßt ist.

Das zuvor beschriebene Verfahren ermöglicht bei der aufgrund der Ausbildung als V-Motor zwei Zylinderbänke aufweisenden Brennkraftmaschine auf einfache und kostengünstige Weise eine gleichmäßige Füllung der Zylinder. Grund hierfür ist in erster Linie, daß für jede Zylinderbank ein die jedem Zylinder zuzuführende Kraftstoffmenge repräsentierendes Signal sensorisch erfaßt wird und die Signale der einzelnen Zylinderbänke in Hinsicht auf eine relative Abweichung miteinander verglichen werden, so daß eine aus der Abweichung resultierende Stellgröße zum Verändern der variablen Ventilsteuerung zur Verfügung steht. Eine hohe Zuverlässigkeit des Verfahrens wird nicht zuletzt dadurch erreicht, daß zusätzlich Laufunruhewerte eines jeden Zylinders ermittelt und für jede Zylinderbank zu einem redundanten Bankmittelwert gemittelt werden, der dann bei der Bildung der Stellgröße berücksichtigt wird.

## Patentansprüche

1. Verfahren zum Synchronisieren der Füllung von Zylindern einer Hubkolben-Brennkraftmaschine, wobei die Brennkraftmaschine mit Zylindern versehen ist, die in wenigstens zwei Zylinderbänken angeordnet sind, und jede Zylinderbank wenigstens ein eigenes, eine Nockenwelle aufweisendes Stellglied (4) zur mechanischen Betätigung von den Zylindern der jeweiligen Zylinderbank zugeordneten Einlaßventilen (2) aufweist, wobei Laufunruhewerte eines jeden Zylinders ermittelt und für jede Zylinderbank zu einem Bankmittelwert gemittelt werden und die Bankmittelwerte der Zylinderbänke jeweils miteinander verglichen werden und bei Feststellung einer relativen Abweichung der jeweiligen Bankmittelwerte voneinander die festgestellte Abweichung kompensiert wird, **dadurch gekennzeichnet,**
**daß** eine variablen Steuerung des Ventilhubes und der Öffnungsdauer der Einlaßventile (2) jeder Zylinderbank in Abhängigkeit von einer Stellgröße mit lastabhängiger Adaption der Stellgröße vorgesehen wird, wobei die Hubbewegung der Einlaßventile über einen zwischen der Nockenwelle (6) und einer verdrehbar gelagerten, von einem gesteuerten Stellmotor (12) angetriebenen Exzenterwelle (9) angeordneten Zwischenhebel (7) und einen auf den Ventilstößel der Einlaßventile wirkenden Schlepphebel (8) variabel gesteuert wird und die Öffnungsdauer der Einlaßventile von einer an der Nockenwelle (6) angeordneten, als Schwenkversteller ausgebildeten hydrodynamischen Einrichtung (13) gesteuert wird,
**daß** eine zentrale Lasterfassung vorgesehen wird, durch welche die Luftmenge des den Zylindern zuzuführenden Luft-Kraftstoff-Gemisches lastabhängig bereitgestellt wird, und
**daß** das den Zylindern zuzuführende Luft-Kraftstoff-Gemisch für jede Zylinderbank getrennt auf die gleiche Luftzahl geregelt wird und Signale, welche die einem Zylinder je Hub in Abhängigkeit von einer lastabhängig bereitgestellten Luftmenge zuführbare Kraftstoffmenge repräsentieren, sensorisch erfaßt werden, wobei die Signale für jede Zylinderbank getrennt mittels einer für jede Zylinderbank vorgesehenen Lambdasonde ermittelt werden,
wobei die Signale und die Bankmittelwerte der Zylinderbänke jeweils kontinuierlich oder sich periodisch wiederholend miteinander verglichen werden und die Stellgröße bei Feststellung einer relativen Abweichung der jeweiligen Signale voneinander und/oder der jeweiligen Bankmittelwerte voneinander das Stellglied (4) wenigstens einer Zylinderbank derart regelt, daß die festgestellte Abweichung kompensiert wird.

2. Verfahren nach Anspruch 1, **dadurch gekennzeichnet, daß** die relative Abweichung der jeweiligen Signale und/oder der jeweiligen Bankmittelwerte der Zylinderbänke voneinander durch Bildung der Differenz oder des Quotienten jeweils zweier Signale oder Bankmittelwerte ermittelt wird.

3. Verfahren nach Anspruch 2, **dadurch gekennzeichnet, daß** aus den relativen Abweichungen der jeweiligen Signale und der jeweiligen Bankmittelwerte der Zylinderbänke voneinander ein gemeinsamer Kennwert zur Bestimmung der das Stellglied (4) regelnden Stellgröße gebildet wird.

4. Verfahren nach einem der Ansprüche 1 bis 3, **dadurch gekennzeichnet, daß** die aus der relativen Abweichung der jeweiligen Signale und/oder der jeweiligen Bankmittelwerte der Zylinderbänke voneinander und/oder aus dem gemeinsamen Kennwert bestimmte Stellgröße digital in einem nichtflüchtigen Speicher, vorzugsweise von einer elektronischen Steuereinheit, gespeichert wird.

5. Verfahren nach einem der Ansprüche 1 bis 4, **dadurch gekennzeichnet, daß** das Stellglied (4) in Abhängigkeit von der Stellgröße auch den Ventilhub und/oder die Öffnungsdauer von Auslaßventilen (3) der Zylinder steuert.

6. Verfahren nach einem der Ansprüche 1 bis 5, **gekennzeichnet durch** ein Signal, das die **durch** eine elektronische Steuereinheit aus der einem Zylinder je Hub zuführbaren Kraftstoffmenge ermittelte Einspritzzeit repräsentiert.

7. Verfahren nach einem der Ansprüche 1 bis 6, **dadurch gekennzeichnet, daß** die Laufunruhewerte durch Ermittlung der Winkelbeschleunigung der Kurbelwelle der Brennkraftmaschine bestimmt werden.

8. Verfahren nach einem der Ansprüche 1 bis 7 **dadurch gekennzeichnet, daß** das Stellglied (4) durch eine kontinuierliche oder sich periodisch wiederholende Ermittlung des aus den jeweiligen Signalen und/oder den jeweiligen Bankmittelwerten der Zylinderbänke gebildeten Kennwerts geregelt wird.

9. Verfahren nach einem der Ansprüche 1 bis 8, **gekennzeichnet durch** eine Brennkraftmaschine, die als Hubkolbenmotor mit einer V-, W- oder Boxeranordnung der Zylinder ausgebildet ist.

## Claims

1. A method of synchronised charging of the cylinders of a reciprocating engine, wherein the engine comprises cylinders disposed in at least two rows and each row has at least one individual actuator (4) comprising a camshaft for mechanically actuating inlet valves (2) associated with the cylinders in the respective row, wherein unquiet running values for each cylinder are determined and are averaged for each row of cylinders to obtain an average value, and the cylinder-row averages are compared with one another and if a deviation between the respective averages is found, the detected deviation is compensated, **characterised in that**
variable control of the valve stroke and the opening time of the inlet valves (2) in each row of cylinders is provided in dependence on a manipulated variable adapted in dependence on the load, wherein the stroke of the inlet valves is controlled in variable manner by a drag lever (8) acting on the inlet-valve tappets and an intermediate lever (7) disposed between the camshaft (6) and a rotatably mounted eccentric shaft (9) driven by a controlled servomotor (12), and the opening time of the inlet valves is stored by a rotation adjuster in the form of a hydrodynamic device (13) disposed on the camshaft (6),
central load detection is provided for supplying the air in the air-fuel mixture for the cylinders in dependence on the load, and
the air-fuel mixture supplied to the cylinders is adjusted separately for each row of cylinders to the same air ratio and signals representing the amount of fuel supplied to each cylinder per stroke in dependence on an air quantity provided in dependence on the load are detected by sensors, wherein the signals for each row of cylinders are separately obtained by a lambda probe provided for each cylinder row,
wherein the signals and the cylinder-row averages in each case are continuously or periodically and repetitively compared and if a deviation is detected between the respective signals and/or the respective row averages the manipulated variable is adjusted by the actuator (4) of at least one cylinder row so as to compensate the detected deviation.

2. A method according to claim 1, **characterised in that** the relative deviation between the respective signals and/or between the respective cylinder-row averages is obtained by forming the difference or the quotient of respective pairs of signals or row averages.

3. A method according to claim 2, **characterised in that** a common characteristic value for determining the manipulated variable to be controlled by the actuator (4) is formed from the relative deviations between the respective signals and the respective cylinder-row averages.

4. A method according to any of claims 1 to 3, **characterised in that** the manipulated value determined from the relative deviation of the respective signals and/or of the respective row averages and/or from the common characteristic value is stored in a non-volatile memory, preferably in an electronic control unit.

5. A method according to any of claims 1 to 4, **characterised in that** the actuator (4) also determines the stroke and/or opening time of outlet valves (3) of the cylinders in dependence on the manipulated variable.

6. A method according to any of claims 1 to 5, **characterised by** a signal which represents the injection time obtained from the amount of fuel supplied to a cylinder per stroke by an electronic control unit.

7. A method according to any of claims 1 to 6, **characterised in that** the unquiet running values are obtained by determining the angular acceleration of the engine crankshaft.

8. A method according to any of claims 1 to 7, **characterised in that** the actuator (4) is controlled by continuous or periodic repetitive determination of the characteristic value formed from the respective signals and/or the respective cylinder-row averages.

9. A method according to any of claims 1 to 8, **characterised by** an engine in the form of a reciprocating engine with a V, W or opposed-cylinder arrangement of the cylinders.

## Revendications

1. Procédé de synchronisation du remplissage de cylindres d'un moteur à combustion à pistons alternatifs, le moteur à combustion comportant des cylindres en au moins deux bancs de cylindres dont chaque banc de cylindres présente au moins son propre actionneur (4) présentant un arbre à cames pour l'actionnement mécanique de soupapes d'admission (2) associées aux cylindres du banc de cylindres respectif, selon lequel on détermine des valeurs de l'instabilité de fonctionnement de chaque cylindre et on calcule une moyenne de banc pour chaque banc de cylindres, les moyennes de banc des bancs de cylindre étant comparées les unes aux autres et, lorsqu'un écart relatif entre les moyennes de banc respectives est constaté, l'écart constaté est compensé,
**caractérisé en ce qu'**
- on prévoit une commande variable de la levée de soupape et de la durée d'ouverture des soupapes d'admission (2) de chaque banc de cylindres en fonction d'une grandeur de réglage avec adaptation de la grandeur de réglage en fonction de la charge, le mouvement de levée des soupapes d'admission étant commandé de manière variable par l'intermédiaire d'une part d'un levier intermédiaire (7) entre l'arbre à cames (6) et un arbre à excentrique pouvant tourner et entraîné par un servomoteur (12) commandé et par l'intermédiaire d'autre part d'un levier oscillant (8) agissant sur le poussoir des soupapes d'admission, et on commande la durée d'ouverture des soupapes d'admission par un dispositif (13) hydrodynamique configuré en tant que régulateur pivotant disposé sur l'arbre à cames (6),
- on prévoit une détection centrale des charges pour fournir la quantité d'air du mélange air/carburant à acheminer vers les cylindres, en fonction de la charge, et
- on règle le mélange air/carburant à acheminer vers les cylindres séparément pour chaque banc de cylindres sur le même indice d'air et on détecte par des capteurs des signaux, représentant la quantité de carburant pouvant être acheminée vers un cylindre par levée en fonction d'une quantité d'air fournie en fonction de la charge, sont détectés par des capteurs, les signaux étant déterminés séparément pour chaque banc de cylindres au moyen d'une sonde lambda prévue pour chaque banc de cylindres, et
- on compare les signaux et les moyennes de banc des bancs de cylindres en continu ou périodiquement les uns aux autres, et la grandeur de réglage lorsqu'un écart relatif entre les signaux respectifs et/ou les moyennes de banc respectives est constaté, régle l'actionneur (4) d'au moins un banc de cylindres pour compenser l'écart constaté.

2. Procédé selon la revendication 1,
**caractérisé en ce que**
l'écart relatif entre les signaux respectifs et/ou les moyennes de banc respectives des bancs de cylindres est déterminé par le calcul de la différence ou du quotient de deux signaux ou moyennes de banc.

3. Procédé selon la revendication 2,
**caractérisé en ce qu'**
on calcule une valeur caractéristique commune à partir des écarts relatifs entre les signaux respectifs et les moyennes de banc respectives des bancs de cylindre afin de déterminer la grandeur de réglage réglant l'actionneur (4).

4. Procédé selon l'une quelconque des revendications 1 à 3,
**caractérisé en ce que**
la grandeur de réglage déterminée à partir de l'écart relatif entre les signaux respectifs et/ou les moyennes de banc respectives des bancs de cylindres et/ou de la valeur caractéristique commune est enregistrée numériquement dans une mémoire non volatile, de préférence d'une unité de commande électronique.

5. Procédé selon l'une quelconque des revendications 1 à 4,
**caractérisé en ce que**
l'actionneur (4) commande également la levée de soupape et/ou la durée d'ouverture des soupapes d'échappement (3) des cylindres en fonction de la grandeur de réglage.

6. Procédé selon l'une quelconque des revendications 1 à 5,
**caractérisé par**
un signal qui représente le temps d'injection déterminé par une unité de commande électronique à partir de la quantité de carburant pouvant être acheminée vers un cylindre à chaque levée.

7. Procédé selon l'une quelconque des revendications 1 à 6,
**caractérisé en ce que**
les valeurs de l'instabilité de fonctionnement sont déterminées par la détermination de l'accélération angulaire du vilebrequin du moteur à combustion.

8. Procédé selon l'une quelconque des revendications 1 à 7,
**caractérisé en ce que**
l'actionneur (4) est réglé par une détermination continue ou périodique de la valeur caractéristique calculée à partir des signaux respectifs et/ou des moyennes de banc respectives des bancs de cylindres.

9. Procédé selon l'une quelconque des revendications 1 à 8,
**caractérisé par**
un moteur à combustion configuré en moteur à pistons alternatifs dont les cylindres sont disposés en V, W ou opposés et horizontaux.
